# EUROPEAN PATENT SPECIFICATION

(11) **EP 1 218 433 B1**
(45) Date of publication and mention of the grant of the patent: **13.08.2003**
(21) Application number: 00965969.9
(22) Date of filing: 08.09.2000
(51) Int. Cl.: C08G 18/48, C08J 9/00, C08K 5/51

(54) **POLYURETHANE FOAM CONTAINING FLAME RETARDANT BLEND OF NON-OLIGOMERIC AND OLIGOMERIC FLAME RETARDANTS**
POLYURETHANSCHAUM, DER EINE FEUERHEMMENDE MISCHUNG VON NICHT-OLIGOMEREN UND OLIGOMEREN FLAMMHEMMERN ENTHÄLT
MOUSSE DE POLYURETHANNE CONTENANT UN MELANGE INFLAMMABLE DE COMPOSES OLIGOMERES ET NON OLIGOMERES INFLAMMABLES

(30) Priority: 09.09.1999 US 392434
(43) Date of publication of application: 03.07.2002
(73) Proprietor: Akzo Nobel N.V., 6824 BM Arnhem (NL)
(72) Inventor: BRADFORD, Larry, L., Danbury, CT (US); PINZONI, Emanuel, Hawthorne, NJ 07506 (US); WILLIAMS, Barbara, A., New York, NY 10032 (US); HALCHAK, Theodore, Upper Montclair, NJ 07043 (US)
(74) Representative: Schalkwijk, Pieter Cornelis
(86) International application number: PCT/EP00/08881
(87) International publication number: WO 01/018088

(56) References cited:
- EP-A- 0 908 464
- US-A- 3 956 200
- US-A- 5 608 100

## Description

### Background of the Invention

There is a wide variety of disclosures in regard of flame retardant additives for polymers, such as polyurethane foams. Two representative examples of disclosures of this type, which relate to blends of two differing flame retardant additives, include the following:
U.S. Patent No. 4,273,881 to J.G. Otten describes the use of a 50:50 mixture of flame retardant A, sold under the trademark ANTIBLAZE® 19, and bis-(2-chloroethyl)-2-chloroethyl-phosphonate (See Col. 9, lines 61-62).
U.S. Patent No. 3,956,200 to J. Biranowski describes the use of flame retardant blends comprising a polyglycol hydrogen polyphosphonate and an additive, non-reactive flame retardant in a ratio of from about 20:1 to 1:1, preferably from about 5:1 to 1:1.

In addition to the foregoing patent disclosures, certain blends of monomeric and oligomeric flame retardants have also been sold to the polyurethane industry, including compositions carrying the trademarks FYROL® 25 and FYROL® EFF of Akzo Nobel Chemicals Inc. The product sold under the former mark included an oligomer that contained a blend of both phosphate and phosphonate moieties, whereas the product sold under the latter mark contained a major amount (about 66%) of the oligomeric component and a minor (about 32.5%) of the monomeric flame retardant component.

The flame retardant blends that have been previously described all contain halogen.

In addition to the foregoing, U.S. Patent No. 5,672,645 to T. Eckel et al. describes a flame retardant blend of a monophosphorus compound, which can be either halogen-containing or non-halogenated, and an oligomeric phosphorus compound. This blend is only described for use in aromatic polycarbonate-containing compositions and not for polyurethane foams.

### Summary of the Invention

The present invention relates to polyurethane foam compositions containing a flame retardant blend comprising: (a) a non-oligomeric, non-halogenated organophosphorus flame retardant that is adapted for use in a polyurethane foam formulation; and (b) an oligomeric organophosphorus flame retardant having a phosphorus content of not less than about 10%, by weight, and at least three phosphorus atom-containing units therein.
Preferred blends unexpectedly pass performance tests at a decreased total phosphorus level as compared to that predicted from the passing performance of the individual blend components. These blends, in some cases, are more cost effective than either one of the blend components.

### Description of the Preferred Embodiments

The non-oligomeric, non-halogenated flame retardants that form one essential component of the blends used in the present invention are those flame retardants additives that have hitherto been used for conferring flame retardancy on polyurethane foams (both flexible and non-flexible polyurethane foams).

One representative class that can be selected includes the non-halogenated phosphate esters, having the formula P(O)(OR)₃, with R in this formula standing for an alkyl moiety containing from about one to about five carbon atoms or an aryl moiety. Representative additives which may be employed herein include: triphenyl phosphate ("TPP"); propylated or butylated TPP ("PTPP" and "BTPP", respectively); triethyl phosphate ("TEP"); tributyl phosphate ("TBP"); and the like. In addition, a non-monomeric (but non-oligomeric) phosphate containing additive, i.e., a dimer, trimer, tetramer, or combination thereof can be selected for use herein. Preferably, such a non-monomeric (but non-oligomeric) phosphate is a dimer, trimer or mixtures thereof, the dimers being most preferred. An example of such a dimer is: resorcinol diphosphate ("RDP").

Another type of organophosphorus additive (a) includes the non-oligomeric phosphonate species wherein one of the groups -OR in the aforementioned phosphates is replaced by the group -R. These compounds have the formula RP(O)(OR)₂. An example of such a phosphonate is dimethyl methyl phosphonate.

The amount of such additive (a) in the blend will range from about 25% to about 95%, by weight of the blend, more preferably from about 40% to about 70%.

The second component of the blend (b) which is used in accordance with the present invention is an oligomeric organophosphorus flame retardant having a phosphorus content of not less than about 10%, by weight, and, in preferred embodiments when an organophosphate is desired, at least three phosphate ester units therein (i.e., at least two phosphate ester repeat units and a phosphate capping unit). The term "oligomeric" as used in relation to this component (b) is meant to exclude monomeric and dimeric species, but does extend to products containing (minor quantities of) trimeric and tetrameric species. The amount of additive (b) in the blend will range from about 5% to about 75%, by weight of the blend, more preferably from about 30% to about 60%. A representative additive of this type is generally described in U.S. Patent No. 4,382,042 to T.A. Hardy, with the non-halogenated versions being preferred (e.g., especially the ethyl group-containing composition). These preferred organophosphate oligomers can be formed by reacting phosphorus pentoxide with the selected trialkyl phosphate (e.g., triethyl phosphate) to form a polyphosphate ester containing P-O-P bonds, which is then reacted with epoxide (e.g., ethylene oxide) to form the desired product. This preferred oligomeric organophosphate flame retardant is of the formula: 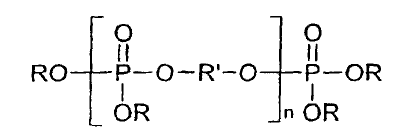 wherein n (which designates the "repeat" phosphate ester units) can range, on a number average basis, from 2 to about 20, preferably from 2 to about 10, and R is selected from the group consisting of alkyl, preferably C₁-C₂₄ alkyl, more preferably C₂ to C₁₀ alkyl, most preferably C₂-C₄ alkyl, and hydroxyalkyl, containing preferably 1-24 carbon atoms and 1-10 hydroxy groups, more preferably from 2-10 carbon atoms and 1-4 hydroxy groups, most preferably from 2-4 carbon atoms, and R' is alkylene, preferably a C₁-C₂₄ alkylene, more preferably a C₂-C₁₀ alkylene, most preferably a C₂-C₄ alkylene.

Especially preferred oligomeric phosphates for use herein will comprise ethyl and ethylene groups as the alkyl and alkylene moieties, will have a hydroxy functionality of not more than about 30 mg KOH/g, will have an acid number of not more than about 2.5 mg KOH/g, and will have a phosphorus content that ranges from about 15% to about 25%, by weight. They are referred to hereinafter as "PEEOP" (or "poly(ethyl ethyleneoxy)phosphate").

It is within the contemplation of the present invention to utilize oligomeric phosphonate-containing materials as component (b). Both substantially pure phosphonate and phosphonate/phosphate compositions are intended to be included. These have the same structure as depicted above for the oligomeric phosphate species, except that the internal (bracketed) RO- on the left side of the structure may be R- and one of the terminal -OR structures on the right side of the formula may be -R. A representative and commercially available example of an additive of this type is FYROL® 51 ex Akzo Nobel Chemicals Inc., which is made by a multistep process from dimethyl methyl phosphonate, phosphorus pentoxide, ethylene glycol, and ethylene oxide.

In accordance with the present invention, the foregoing flame retardant blend is added to a selected polyurethane foam formulation at from about 2 to about 35 parts by weight of the blend per 100 parts by weight of the polyol in the formulation (percent by weight on polyol, polyol%w/w). The weight percentage of phosphorus in the final polyurethane foam formulation will preferably range from about 0.25 wt% to about 3.5 wt%. The foregoing type of flame retardant blend is especially adapted for use in flexible and rigid polyurethane foams. A ratio of monomeric additive:oligomeric additive of from about 1:1 to about 20:1 was found to be pre-eminently suited for use in typical polyester or polyether polyurethane flexible foams, since such blends have shown unexpectedly greater efficiency of the blend as compared to the additive sums of the individual components thereof. This performance is especially attractive since the oligomeric material is typically much more expensive than the monomeric material, making cost efficiency of the blend particularly beneficial.

The density of the foam is an important factor. In general, the higher the density, the less flame retardant additive is required to pass the flame test. The addition of the blended product is more enhanced with this rule. For example, a foam with a density of 16 kg.m⁻³ (hereinafter called 1.0 density foam, since its weight is 1.0 pound per cubic foot) containing BTPP and an oligomeric phosphate ester, PEEOP, in a 1:1 weight ratio, will pass the TB117 test when 16 polyol%w/w of the blend is used. The same blend, when used in a foam with a density of 28.8 kg.m⁻³ (hereinafter called 1.8 density foam) will ensure that the TB117 test is passed when used in an amount of 5 polyol%w/w.

A blend of two phosphorus-containing products differing in efficiency (as measured by the amount required to pass a given test) can be further compared by analyzing the amount of phosphorus required to pass the given test. For blends of these two products it is expected that the amount of phosphorus required to pass said test will fall between the two. If less phosphorus is required for the blend than for either individual product, it is clearly synergistic and advantageous. For example (from Data Sets 2 and 3), a monomeric flame retardant (BTPP) requires 1.36% of phosphorus to pass the TB117 test, and an oligomeric organophosphate flame retardant requires 0.95% phosphorus to meet the same test. The blend of the two products in a 1:1 ratio only requires a level of 0.69% phosphorus (all in 1.8 density foam).

As disclosed in U.S. Patent No. 3,956,200, preferred flexible foams could be made as follows:
the actual incorporation of the novel flame retardant blend in the preparation of flexible polyurethane foams may be accomplished by means of a variety of procedures including the preliminary admixture of the blend, or its individual components, with the polyol reagent prior to the polymerization reaction, or the blend, or the two individual components of the blend, may be introduced as separate streams to a foam machine mixing head.

As examples of organic polyisocyanates which can be employed to make the polyurethane foams may be mentioned: toluene-2,4-diisocyanate; toluene-2,6-diisocyanate; 4-methoxy-1,3-phenylene diisocyanate; diphenyl methane-4,4'-diisocyanate; 4-chloro-1,3-phenylene-diisocyanate; 4-isopropyl-1,3-phenylene-diisocyanate; 4-ethoxy-1,3-phenylene-diisocyanate; 2,4-diisocyanate-diphenyl ether; 3,3'-dimethyl-4,4'-diisocyanatodiphenyl methane; mesitylene diisocyanate; durylene diisocyanate; 4,4'-methylene-bis(phenyl isocyanate); benzidine diisocyanate; o-nitrobenzidine diisocyanate; 4,4'-diisocyanatodibenzyl; 3,3'-bitolylene-4,4'-diisocyanate; 1,5-naphthalene diisocyanate; tetramethylene diisocyanate; hexamethylene diisocyanate; decamethylene diisocyanate; toluene-2,4,6-triisocyanate; tritolylmethane triisocyanate; 2,4,4'-triisocyanatodiphenyl ether; the reaction product of toluene diisocyanate with trimethylol propane; and the reaction product of toluene diisocyanate with 1,2,6-hexane triol.

Alternatively, prepolymers made by reacting one or more of the above polyisocyanates with a polyhydroxy compound such as a polyester having terminal hydroxyl groups, a polyhydric alcohol, glycerides or hydroxy-containing glycerides, etc., can be used as the polyisocyanate. The prepolymers should have terminal isocyanate groups. To ensure their presence it is frequently desirable to employ an excess of 5% or more of the polyisocyanate in forming the prepolymer. Typical examples of such prepolymers having isocyanate end groups are those formed from toluene diisocyanate and polyhydroxy compounds. In most cases, a mixture of 80% of the 2,4-isomer and 20% of the 2,6-isomer of toluene diisocyanate is employed in making these prepolymers. Thus, use can be made of the prepolymers resulting from the reaction between toluene diisocyanate and castor oil, blown tung oil, blown linseed oil or blown soya oil, and of toluene diisocyanate and the polyester of ethylene glycol, propylene glycol, and adipic acid.

Examples of suitable polyols are polyethylene glycols, polypropylene glycols; ethylene glycol; diethylene glycol; triethylene glycol; propylene glycol; dipropylene glycol; tripropylene glycol; 1,4-butane diol; thiodiglycol; glycerol; trimethylol ethane; trimethylol propane; ether triols from glycerine and propylene oxide; ether-containing triols from 1,2,6-hexane triol and propylene oxide; sorbitol-propylene oxide adducts; pentaerythritol-propylene oxide adducts; trimethylol phenol; oxypropylated sucrose; triethanolamine; pentaerythritol; diethanolamine, castor oil; blown linseed oil; blown soya oil; N,N,N',N'-tetrakis (2-hydroxyethyl) ethylene diamine; N,N,N',N'-tetrakis (2-hydroxypropyl) ethylene diamine; mixed ethylene glycol-propylene glycol adipate resin; polyethylene adipate phthalate, and polyneopentylene sebacate.

In preparing the foamed polyurethanes, use can be made of any of the conventional basic catalysts, for example N-methyl morpholine, N-ethyl morpholine, 1,2,4-trimethyl piperazine, trimethyl amine, triethyl amine, tributyl amine, and other trialkyl amines, the esterification product of adipic acid and diethyl ethanolamine, triethyl amine citrate, 3-morpholinopropionamide, 1,4-bis(2-hydroxypropyl)-2-methyl piperazine, 2-diethyl aminoacetamide, 3-diethyl aminopropionamide, diethyl ethanolamine, triethylene diamine, N,N,N',N'-tetrakis (2-hydroxypropyl) ethylene diamine N,N'-dimethyl piperazine, N,N-dimethyl hexahydroaniline, tribenzylamine and sodium phenolate. Also applicable are tin compounds, e.g. hydrocarbon tin acylates such as dibutyl tin dilaurate, dibutyl tin diacetate, dibutyl tin dioctoate, tributyl tin monolaurate, dimethyl tin diacetate, dioctyl tin diacetate, dilauryl tin diacetate, dibutyl tin maleate, and alkyl tin alkoxides, e.g., dibutyl tin diethoxide, dibutyl tin dimethoxide, diethyl tin dibutoxide, as well as other tin compounds, e.g., octylstannoic acid, trimethyl tin hydroxide, trimethyl tin chloride, triphenyl tin hydride, triallyl tin chloride, tributyl tin fluoride, dibutyl tin dibromide, bis(carboethoxymethyl) tin diiodide, tributyl tin chloride, trioctyl tin acetate, butyl tin trichloride, or octyl tin tris(thiobutoxide), dimethyl tin oxide, dibutyl tin oxide, dioctyl tin oxide, diphenyl tin oxide, stannous octoate, and stannous oleate.

Conventional surfactants can be added in an amount of 1% or less, e.g., 0.2% by weight of the composition. The preferred surfactants are silicones, e.g., polydimethyl siloxane having a viscosity of 3 to 100 mPa.s (centistokes), triethoxydimethyl polysiloxane, molecular weight 850, copolymerized with a dimethoxypolyethylene glycol having a molecular weight of 750.

The foaming reaction can be carried out by adding water to the polyol prior to or simultaneously with the addition of the polyisocyanate. Alternatively, foams can be prepared by the use of a foaming or blowing agent. These usually take the form of a liquefied, halogen-substituted alkane, for example methylene chloride. Especially preferred are those halogen-substituted alkanes having at least one fluorine atom in their molecules, such as dichlorodifluoromethane, dichloromonofluoromethane, chlorodifluoromethane, and dichlorotetrafluoroethane. These blowing agents when used they are uniformly distributed in either the polyol reactant or the polyisocyanate reactant, whereupon the reactants are mixed, with the temperature of the mixture being allowed to rise above the boiling point of the liquefied gas during the ensuing reaction, so as to produce a porous polyurethane. It should also be noted that foaming may also be affected by combining the use of a blowing agent with the addition of water to the polyol.

The flame retardant polyurethane foams resulting from the process of this invention may be utilized in all of the above-noted end use applications for such foams and particularly in those applications wherein their flame retardant properties render them particularly useful, for example as insulation materials for building construction.

However, the flame retardant blend according to the invention can be used in non-flexible polyurethane foams as well, in a way that is known in the art.

The foregoing invention is further illustrated by the Examples and Data Sets that follow.

### EXAMPLES

The flame retardant test data following in the Data Sets was generated using a typical polyether polyurethane flexible foam that was tested at nominal densities of 16, 24, and 28.8 kg.m⁻³ (1.0, 1.5, and 1.8 density foam, respectively). The formulation used to form the foam was made using a polyether polyol having a hydroxyl number of 56, a water level of from 3.55% to 5.6%, an amine level of about 0.25%, and an NCO index of 110.

The following standard tests were employed:
TB117, as published by the State of California Department of Consumer Affairs, Bureau of Home Furnishings and Thermal Insulation, 3485 Orange Grove Avenue, North Highlands, CA 95660-5595, Technical Bulletin No. 117, REQUIREMENTS, TEST PROCEDURE AND APPARATUS FOR TESTING THE FLAME RETARDANCE OF RESILIENT FILLING MATERIALS USED IN UPHOLSTERED FURNITURE, January 1980 (Cal 117 test), and
MVSS 302, as published by General Motors Corporation, Fisher Body Division, Material Development & Testing Laboratory, Test Method 302, including TM 32-10 ACCELERATED AGING (FLAMMABILITY), July 1983, and TM 32-12 FLAMMABILITY OF INTERIOR TRIM MATERIALS, January 1979, as also mentioned in 49 CFR 547.302, Flammability of interior materials (1984) (MVSS-302 test). A short description of the tests is as follows:
   A. TB 117 A Test: This test is a small-scale vertical test with a twelve-second-ignition time. The sample size was 30.5 * 7.6 * 1.3 cm (12" x 3 x ½"). The ignition source was removed after twelve seconds. A second clock is started if the sample continues to burn. The criteria for failing included: a sample exceeding an individual burn of eight inches or an average burn of six inches. The time criteria required that an individual specimen would not have an individual afterflame or afterglow exceeding ten seconds or an average afterflame or afterglow exceeding five seconds.
   B. TB 117 D Test: This test is a smoldering test in which a cigarette is used as the ignition source under a cotton cloth cover. The foam sample was covered with a standard velvet cotton cloth and was placed in a small wooden frame to form a mock chair. The back of the sample was 20.3 * 17.8 * 5.1 cm (8" x 7" x 2") and the seat was 20.3 * 10.2 * 5.1 cm (8" x 4" x 2"). The sample was preweighed before testing and was again weighed after the test was finished. If the foam lost more than 20% of its weight, it was judged to be a failure.
   C. MVSS 302 Test: This test is a horizontal flame test that is used as a guideline for automobile manufactures. The sample size was 35.6 * 10.2 * 1.3 cm (14" x 4" x ½"). There is a line 3.8 cm (1½") from the ignition point. A flame was ignited for fifteen seconds. The ignition source was then turned off and the sample was rated. A "DNI" rating indicates that the sample did not support combustion ("did not ignite"). A rating of "SE" indicates that the sample ignited but did not burn to the timing zone, which is a point starting from the 3.8 cm (1½") mark to the 8.9 cm (3½") line. A rating of "SENBR" indicates that the sample burned past the 3.8 cm (1½") line but was extinguished before the 8.9 cm (3½") mark. A rating of "SE/B" indicates that a sample burned past the 8.9 cm (3½") mark but was extinguished before the end point. An inch per minute rate was then calculated. The bum rate indicates that a sample burned past the 8.9 cm (3½") mark. An indication of a burn rate or an SE/B rating higher than 10.2 cm/min (4.0 in/min) indicates failure in accordance with this test. For this study a minimum performance of SENBR was required.

A number of flame retardant additives were used in TB-117 and MVSS 302 tests in a variety of foams, either alone or in combination, as further described below. They were: triphenyl phosphate ("TPP"), available under the trademark PHOSFLEX® TPP from Akzo Nobel Chemicals Inc.; butylated triphenyl phosphate ("BTPP"), available under the trademark PHOSFLEX® 71B from Akzo Nobel Chemicals Inc.; a poly(ethyl ethyleneoxy) phosphate ("PEEOP"), of the type described in copending U.S. Serial No. 08/677,283, having a molecular weight of about 915 (number average)/1505 (weight average), a typical hydroxyl number of under about 5; and a blend of 50 wt% PHOSFLEX® 71B and 50 wt% PEEOP, which is referred to hereinafter as "Blend" in some of the Data Sets that follow.

### Data Set 1

The following data illustrates that the relative performance of flame retardant additives varies with foam density as well as the test method used. The described blends give unexpected synergism in some of these combinations (as the density increases, less flame retardant additive is usually required to meet a specific test):

| Passing FR Levels* (Data Set 1) | | | | | | |
|---|---|---|---|---|---|---|
| Test method | TB-117 | TB-117 | TB-117 | MVSS 302 | MVSS 302 | MVSS 302 |
| Foam density | 1.0 | 1.5 | 1.8 | 1.0 SENBR | 1.5 SENBR | 1.8 SENB R |
| BTPP | 17 | | 16 | 17 | | 14 |
| PEEOP | 7 | 5 | 5 | 7 | 5 | 4 |
| BTPP:PEEOP 1:1 | 16 | 10 | 5 | 15 | 8 | 5 |
| RDP/ PEEOP (1:1) | | 8 | 5 | | 8 | 5 |
| PHOSFLEX 4**:PEEOP (1:1) | | 12 | 7 | | 5 | 5 |
| PHOSFLEX 31 brand***/ PEEOP 1:1 | | 9 | 7 | | 7 | 4 |
| TPP/PEEOP 1:1 | | 12 | 7 | | 8 | 4 |

| | | | | | | |
|---|---|---|---|---|---|---|
| * in polyol%w/w. | | | | | | |
| ** PHOSFLEX 4 flame retardant is tributyl phosphate. | | | | | | |
| *** PHOSFLEX 31 flame retardant is propylated triphenyl phosphate. Ratios are weight ratios | | | | | | |

### Data Set 2

The following data illustrates the polyol%w/w of flame retardant (blend) needed to actually pass the MVSS 302 test and the TB 117 tests in a 1.5 density foam, as well as the phosphorus level in such foams:

| Flame Retardant | %P | TB117 (polyol% w/w) | %P to pass in foam | MVSS 302 (polyol%w/ ) | %P to pass in foam |
|---|---|---|---|---|---|
| BTPP | 8.5 | 26 | 2.2 | 28 | 2.4 |
| BTPP / PEEOP* | 13.8 | 10 | 1.38 | 8 | 1.10 |
| PHOSFLEX 31P / PEEOP* | 13.5 | 9 | 1.21 | 7 | 0.95 |
| TPP / PEEOP* | 14.3 | 12 | 1.72 | 8 | 1.14 |
| PHOSFLEX 4 / PEEOP* | 15.4 | 12 | 1.85 | 5 | 0.77 |
| RDP / PEEOP* | 15 | 8 | 1.2 | 8 | 1.2 |
| PEEOP | 19 | 5 | 0.95 | 5 | 0.95 |
| All tests done with 1.5 density foam | | | | | |

| | | | | | |
|---|---|---|---|---|---|
| * = all in a 1:1 weight ratio | | | | | |

The following additional data was obtained:

| SAMPLE ID | Total % P to pass TB117 | Total % P to pass MVSS302 | Density kg.m⁻³ (lb/ft³) | Air Flow dm³/sec (ft³/min) |
|---|---|---|---|---|
| BTPP(estimate) | 2.2 | 2.4 | 24.0 (1.5) | 2.36 (5.0) |
| Blend: 1:1 | 1.38 | 1.1 | 23.8 (1.49) | 2.45 (5.2) |
| PEEOP (neat) | 0.95 | 0.95 | 24.2 (1.51) | 2.45 (5.2) |

From an analysis of all of the foregoing data a number of conclusions can be reached. generally speaking, an increase in the density of the foam will reduce the amount of flame retardant that is needed to pass a specific flame retardancy test.
There is a clear advantage to blending the PHOSFLEX® 71B brand material with the PEEOP additive in a 1.8 density foam, since the BTPP/PEEOP additive passes the TB 117 and MVSS 302 test at 5 parts.

### Data Set 3

The following data illustrates the parts per hundred of flame retardant (PEEOP and/or BTPP) needed to actually pass the MVSS302 test and the TB 117 tests in a 1.8 density foam and the theoretical, predicted amount.

| Flame Retardant | MVSS 302 | Theoretical | TB 117 | Theoretical |
|---|---|---|---|---|
| 100% BTPP | 14 | 14 | 16 | 16.0 |
| 1 BTPP: 1 PEEOP | 5 | 9 | 5 | 10.5 |
| 100% PEEOP | 4 | 4 | 5 | 5.0 |

The following additional data was obtained:

| SAMPLE | Total %P to pass TB117 | Total % P pass MVSS302 | Density kg.m⁻³ (lb/ft³) | Air Flow dm³/sec (ft³/min) |
|---|---|---|---|---|
| BTPP (Neat) | 1.36 | 1.19 | 29.2 (1.82) | 1.98 (4.2) |
| Blend: 1:1 | 0.69 | 0.69 | 28.7 (1.79) | 1.93 (4.1) |
| PEEOP (neat) | 0.95 | 0.76 | 29.6 (1.85) | 2.83 (6.0) |

For 1.5 and 1.8 density foam, blends (1:1 weight ratio) of the BTPP:PEEOP additives showed an improvement over the use of neat BTPP. The blends passed the TB-117 test at 5 polyol%w/w in the 1.8 density foam, whereas the neat BTPP material passed at 16 polyol%w/w. The blend, while containing only 50% of the PEEOP component, is nearly as efficient as neat PEEOP (5 polyol%w/w needed in a 1.8 density foam and 10 polyol%w/w needed in a 1.5 density foam) but would be much cheaper to produce due to the amount of the cheaper BTPP material.
The 1:1 ratio of BTPP:PEEOP in a 1.8 density foam is of particular interest. The 1:1 ratio blend shows an advantage (pass: 5 polyol%w/w in MVSS 302 test) over the use of the neat BTPP material (pass: 14 polyol%w/w). It is also advantageous to use the 1:1 ratio material in 1.5 density foam. The BTPP-containing sample passes at about 15-16 polyol%w/w, whereas the 1:1 weight ratio BTPP:PEEOP blend passes at 8 polyol%w/w.

### Data Set 4

This Data Set illustrates the flammability efficiency of other monomers and a dimer blended with PEEOP flame retardants at a 1:1 weight ratio in a 1.8 density foam:

| Flame Retardant | %P | TB117 (polyol% w/w) | %P to pass in foam | MVSS 302 (polyol% w/w) | %P to pass in foam |
|---|---|---|---|---|---|
| BTPP | 8.5 | 16 | 1.36 | 14 | 1.19 |
| BTPP/PEEOP | 13.8 | 5 | 0.69 | 5 | 0.69 |
| PHOSFLEX 31P / PEEOP | 13.5 | 7 | 0.94 | 4 | 0.54 |
| TPP / PEEOP | 14.3 | 7 | 1.00 | 4 | 0.57 |
| PHOSFLEX 4 / PEEOP | 15.4 | 7 | 1.08 | 5 | 0.77 |
| PEEOP | 19 | 5 | 0.95 | 4 | 0.76 |
| RDP/PEEOP | 15 | 5 | 0.75 | 5 | 0.75 |

The foregoing Examples merely illustrate certain embodiments of the present invention and for that reason should not be construed in a limiting sense. The scope of protection that is sought is set forth in the claims that follow.

## Claims

1. A polyurethane foam that contains an effective amount for flame retardancy of a flame retardant blend comprising: (a) a non-oligomeric, non-halogenated organophosphorus flame retardant that is adapted for use in a polyurethane foam formulation; and (b) an oligomeric organophosphorus flame retardant having a phosphorus content of not less than about 10%, by weight, and at least three phosphorus atom-containing units therein.

2. A foam as claimed in Claim 1 wherein flame retardant (a) in the blend is a non-halogenated phosphate ester containing alkyl groups.

3. A foam as claimed in Claim 1 wherein flame retardant (a) in the blend is a non-halogenated phosphate ester containing aryl groups.

4. A foam as claimed in Claim 1 wherein flame retardant (a) in the blend is a non-halogenated phosphonate-containing composition.

5. A foam as claimed in any one of the preceding claims wherein flame retardant (a) in the blend is present at from about 25% to about 95%, by weight of the blend.

6. A foam as claimed in any one of claims 1-5 wherein the oligomeric organophosphorus flame retardant is selected from the group of compounds represented by the formula: 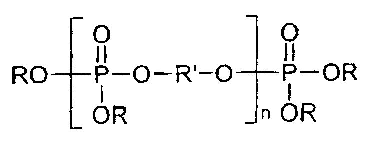 wherein n, on a number average basis, can range from 2 to about 20, R is selected from the group consisting of alkyl and hydroxyalkyl, and R' is alkylene.

7. A foam as claimed in claim 6 wherein R is ethyl and R' is ethylene.

8. Use of a flame retardant blend comprising: (a) a non-oligomeric, non-halogenated organophosphorus flame retardant that is adapted for use in a polyurethane foam formulation; and (b) an oligomeric organophosphorus flame retardant having a phosphorus content of not less than about 10%, by weight, and at least three phosphorus atom-containing units therein, in the production of polyurethane foams to enhance the flame retardancy of the resulting foam.

9. Use according to claim 8 wherein the blend consists essentially of components (a) and (b).

10. Use according to claim 8 or 9 wherein the amount of the blend that is used to make flame retardant polyurethane foam is 2-35 percent by weight, based on the weight of the polyol that is used to make said foam.

## Patentansprüche

1. Polyurethanschaum, der eine zur Flammhemmung effektive Menge eines flammhemmenden Gemischs enthält, umfassend: (a) einen nichtoligomeren, nichthalogenierten Organophosphor-Flammhemmer, der für die Verwendung in einer Polyurethanschaumzubereitung geeignet ist; und (b) einen oligomeren Organophosphor-Flammhemmer mit einem Phosphorgehalt von nicht weniger als etwa 10 Gew.-% und wenigstens drei phosphoratomhaltigen Einheiten darin.

2. Schaumstoff gemäß Anspruch 1, wobei der Flammhemmer (a) in dem Gemisch ein nichthalogenierter Phosphorsäureester ist, der Alkylgruppen enthält.

3. Schaumstoff gemäß Anspruch 1, wobei der Flammhemmer (a) in dem Gemisch ein nichthalogenierter Phosphorsäureester ist, der Arylgruppen enthält.

4. Schaumstoff gemäß Anspruch 1, wobei der Flammhemmer (a) in dem Gemisch eine nichthalogeniertes Phosphonat enthaltende Zusammensetzung ist.

5. Schaumstoff gemäß einem der vorstehenden Ansprüche, wobei der Flammhemmer (a) in dem Gemisch in einer Menge von etwa 25 bis etwa 95 Gew.-% des Gemischs vorhanden ist.

6. Schaumstoff gemäß einem der Ansprüche 1 bis 5, wobei der oligomere Organophosphor-Flammhemmer aus der Gruppe der Verbindungen ausgewählt ist, die durch die Formel 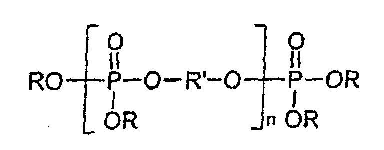 dargestellt werden, wobei n, auf einer zahlengemittelten Basis, im Bereich von 2 bis etwa 20 liegen kann, R aus der Gruppe ausgewählt ist, die aus Alkyl und Hydroxyalkyl besteht, und R' Alkylen ist.

7. Schaumstoff gemäß Anspruch 6, wobei R Ethyl ist und R' Ethylen ist.

8. Verwendung eines flammhemmenden Gemischs, das folgendes umfasst: (a) einen nichtoligomeren, nichthalogenierten Organophosphor-Flammhemmer, der für die Verwendung in einer Polyurethanschaumzubereitung geeignet ist; und (b) einen oligomeren Organophosphor-Flammhemmer mit einem Phosphorgehalt von nicht weniger als etwa 10 Gew.-% und wenigstens drei phosphoratomhaltigen Einheiten darin, bei der Herstellung von Polyurethanschäumen zur Verstärkung der flammhemmenden Eigenschaft des resultierenden Schaumstoffs.

9. Verwendung gemäß Anspruch 8, wobei das Gemisch im Wesentlichen aus den Komponenten (a) und (b) besteht.

10. Verwendung gemäß Anspruch 8 oder 9, wobei die Menge des Gemischs, die zur Herstellung von flammhemmendem Polyurethanschaum verwendet wird, 2-35 Gew.-% beträgt, bezogen auf das Gewicht des Polyols, das zur Herstellung des Schaumstoffs verwendet wird.

## Revendications

1. Mousse de polyuréthane contenant une quantité efficace pour l'ignifugation d'un mélange ininflammable comprenant : (a) un composé organophosphoré non halogéné, non oligomère, ininflammable adapté à l'utilisation dans une formulation en mousse de polyuréthane ; et (b) un composé organophosphoré oligomère ininflammable ayant une teneur en phosphore non inférieure à environ 10 % en poids, et au moins trois unités contenant des atomes de phosphore à l'intérieur.

2. Mousse selon la revendication 1, dans laquelle le composé ininflammable (a) dans le mélange est un ester de phosphate non halogéné contenant des groupes alkyle.

3. Mousse selon la revendication 1, dans laquelle le composé ininflammable (a) dans le mélange est un ester de phosphate non halogéné contenant des groupes aryle.

4. Mousse selon la revendication 1, dans laquelle le composé ininflammable (a) dans le mélange est une composition contenant un phosphonate non halogéné..

5. Mousse selon l'une quelconque des revendications précédentes, dans laquelle le composé ininflammable (a) est présent dans le mélange à un taux allant d'environ 25 % à environ 95 % en poids du mélange.

6. Mousse selon l'une quelconque des revendications 1 à 5, dans laquelle le composé ininflammable organophosphoré oligomère est sélectionné parmi le groupe de composés représentés par la formule : 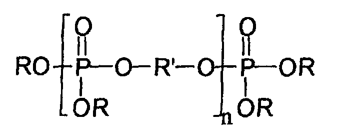 dans laquelle n, sur la base d'une moyenne en nombre, peut varier de 2 à environ 20, R est sélectionné parmi le groupe comprenant un alkyle et un hydroxyalkyle, et R' est un alkylène.

7. Mousse selon la revendication 6, dans laquelle R est un éthyle et R' est un éthylène.

8. Utilisation d'un mélange ininflammable comprenant : (a) un composé organophosphoré non halogéné, non oligomère ininflammable adapté à l'utilisation dans une formulation en mousse de polyuréthane ; et (b) un composé organophosphoré oligomère ininflammable ayant une teneur en phosphore non inférieure à environ 10 % en poids, et au moins trois unités contenant des atomes de phosphore à l'intérieur, dans la production de mousses de polyuréthane afin d'améliorer l'ignifugation de la mousse résultante.

9. Utilisation selon la revendication 8, dans laquelle le mélange comprend essentiellement les composés (a) et (b).

10. Utilisation selon les revendications 8 ou 9, dans laquelle la quantité du mélange qui est utilisée pour fabriquer une mousse de polyuréthane ininflammable est de 2 à 35 pour cent en poids, par rapport au poids de polyol qui est utilisé pour fabriquer ladite mousse.
